**Europäisches Patentamt**

**European Patent Office**

**Office européen des brevets**

(11) Veröffentlichungsnummer: **0 246 340**
**A1**

## (12) EUROPÄISCHE PATENTANMELDUNG

(21) Anmeldenummer: **86106774.2**

(22) Anmeldetag: **17.05.86**

(51) Int. Cl.4: **G09B 23/28** , **G06F 15/72**

(43) Veröffentlichungstag der Anmeldung:
**25.11.87 Patentblatt 87/48**

(84) Benannte Vertragsstaaten:
**AT BE CH DE FR GB IT LI LU NL SE**

(71) Anmelder: **GIT Gesellschaft für Ingenieur-Technik mbH**
**Lindenallee 68**
**D-4300 Essen 1(DE)**

(72) Erfinder: **Elias, Hermann-Josef Dr. Dipl.-Wirtsch.-Ing.**
**Goethestrasse 28**
**D-4300 Essen 1(DE)**
Erfinder: **Lux, Carlo, Dipl.-Ing.**
**Kocherstrasse 20**
**D-4300 Essen 18(DE)**
Erfinder: **Wetjen, Andreas, Dipl.-Math.**
**Herrenkamp 24**
**D-2815 Langwedel(DE)**

(74) Vertreter: **Rucker, Bernd, Dipl.-Ing.**
**c/o Krauss-Maffei AG Krauss-Maffei-Strasse 2**
**D-8000 München 50(DE)**

(54) **Verfahren zur Simulation der Bewegungen von menschlichen Körpermodellen.**

(57) Zur realitätsnahen Simulation der Bewegungen von menschlichen Körpermodellen wird zunächst das Körpermodell in eine Vielzahl von relativ zueinander bewegbaren Volumeneinheiten rechnerisch zerlegt. Die Volumeneinheiten werden dabei in ihrer räumlichen Ausdehnung jeweils durch eine Vielzahl von gespeicherten Koordinatenpunkten festgelegt, welche sowohl die Oberflächen als auch das Innere der Volumeneinheiten definieren. Durch Veränderung der gespeicherten Raumkoordinatenpunkte nach Maßgabe von Bewegungsgleichungen werden die Volumeneinheiten in ihrer relativen Bewegung zueinander und ggfs. zu einer Umgebung simuliert. Dabei erfolgt eine Plausibilitätskontrolle der Bewegungszustände bzgl. Körperanatomie und ggfs. Umgebungsgeometrie. Die Bestimmung der Raumkoordinatenpunkte erfolgt in der Weise, daß sich in sämtlichen Bewegungszuständen ununterbrochene Oberflächenübergänge zwischen aneinander angrenzenden Volumeneinheiten ergeben.

Fig. 1

## Verfahren zur Simulation der Bewegungen von menschlichen Körpermodellen

Die Erfindung betrifft ein Verfahren zur Simulation der Bewegungen von menschlichen Körpermodellen.

Zur Untersuchung der ergonomischen Bedingungen an Arbeitsplätzen werden in der Videosomatographie die Fernsehbilder einer in unterschiedlichen Bewegungsphasen aufgenommenen Untersuchungsperson mit einem unter dem gleichen Winkel aufgenommenen Fernsehbild des zu untersuchenden Arbeitsplatzes gemischt. Dabei erhält man eine Art Schnittbild der Untersuchungsperson mit dem Arbeitsplatz. Dieses Verfahren erlaubt jedoch nur eine beschränkte Aussage, da auch durch eine Vielzahl von Schnittbildern in unterschiedlichen Raumwinkeln die Ver hältnisse eines Volumenmodells nicht vollständig simulierbar sind und im übrigen stets an die spezifischen, anatomischen Gegebenheiten der Versuchsperson gebunden sind. Aus diesen Gründen ist es für genauere Untersuchungen vielfach unerläßlich, Modelluntersuchungen mit Körperpuppen durchzuführen. Bei Kollisionsuntersuchungen ist die letztgenannte Methode die Regel.

Zur Verringerung des hohen zeitlichen und finanziellen Aufwandes solcher Modelluntersuchungen ist bereits versucht worden, z.B. mit Hilfe der CAD-Technik Körpermodelle in ihren Bewegungsabläufen relativ zu einer Umgebung auf Bildschirmen zu simulieren. Die dabei verwendeten Körpermodelle sind Drahtmodelle, deren Aussagekraft beschränkt ist. Beispielsweise lassen sich mögliche Kollisionen von nicht simulierten Körperteilen, z. B. der Kniescheibe, mit der Umgebung ebensowenig erfaßen wie das Gesichtsfeld des Modells. Diese Unzulänglichkeiten treffen größtenteils auch auf Simulationsverfahren zu, welche Oberflächenmodelle verwenden, bei denen zwischen angrenzenden Volumeneinheiten, z. B. Rumpfober-und -unterteil, in den meisten Bewegungsphasen Lücken auf treten. Alle diese Simulationsverfahren berücksichtigen des weiteren keine bevölkerungsgruppenspezifische Gegebenheiten, wie beispielsweise die unterschiedliche Anatomie von Männern und Frauen, die eingeschränkten Bewegungsmöglichkeiten von Behinderten und dgl.

Die Aufgabe der Erfindung besteht demgegenüber darin, ein Simulationsverfahren der geschilderten Art dahingehend zu verbessern, daß die realitätsnahen Ergebnisse direkter Modelluntersuchungen mit erheblich geringerem Aufwand erzielbar sind, wobei bevölkerungsgruppenspezifischen Gegebenheiten auf einfache Weise Rechnung getragen werden kann.

Diese Aufgabe wird erfindungsgemäß durch die Merkmale des Patentanspruchs 1 gelöst.

Vorteilhafte Ausgestaltungen und Weiterbildungen des erfindungsgemäßen Verfahrens ergeben sich aus den Unteransprüchen.

Die Erfindung wird nachstehend anhand der Zeichnungen näher erläutert.

Es zeigt:

Fig. 1 ein mit Hilfe des erfindungsgemäßen Verfahrens rechnerisch simuliertes und auf einem Bildschirm dargestelltes Körpermodell in seiner Grundstellung;

Fig. 2 das Körpermodell nach Fig. 1 beim Sprung über eine Hürde als Beispiel für die Simulation verschiedener Körperstellungen und Bewegungsmöglichkeiten des Menschen;

Fig. 3 das Körpermodell nach Fig. 1 mit bewegtem rechten Arm, um als Beispiel für die Darstellung von Bewegungsräumen in unterschiedlicher Umgebung z.B. für Kollisionsuntersuchungen;

Fig. 4 die detaillierte rechte Hand des Körpermodells nach Fig. 1 als Beispiel für die Simulation von feinmotorischen Bewegungen bei bestimmten Arbeitsabläufen;

Fig. 5 zwei Körpermodelle nach Fig. 1 beim Sitzen in einem Flugzeug-Cockpit, wobei zielpunktorientierte Bewegungen von Armen und Beinen simuliert werden;

Fig. 6 die Simulation des Gesichtsfeldes eines der beiden Körpermodelle in der Stellung und Umgebung gemäß Fig. 5, und

Fig. 7 das Körpermodell nach Fig. 1 beim Einsteigen in eine die Fahrkabine eines Lastkraftwagens als Beispiel für eine durch Simulation erzielte Abstimmung von Mensch und Technik bereits in einem früheren Entwicklungsstadium.

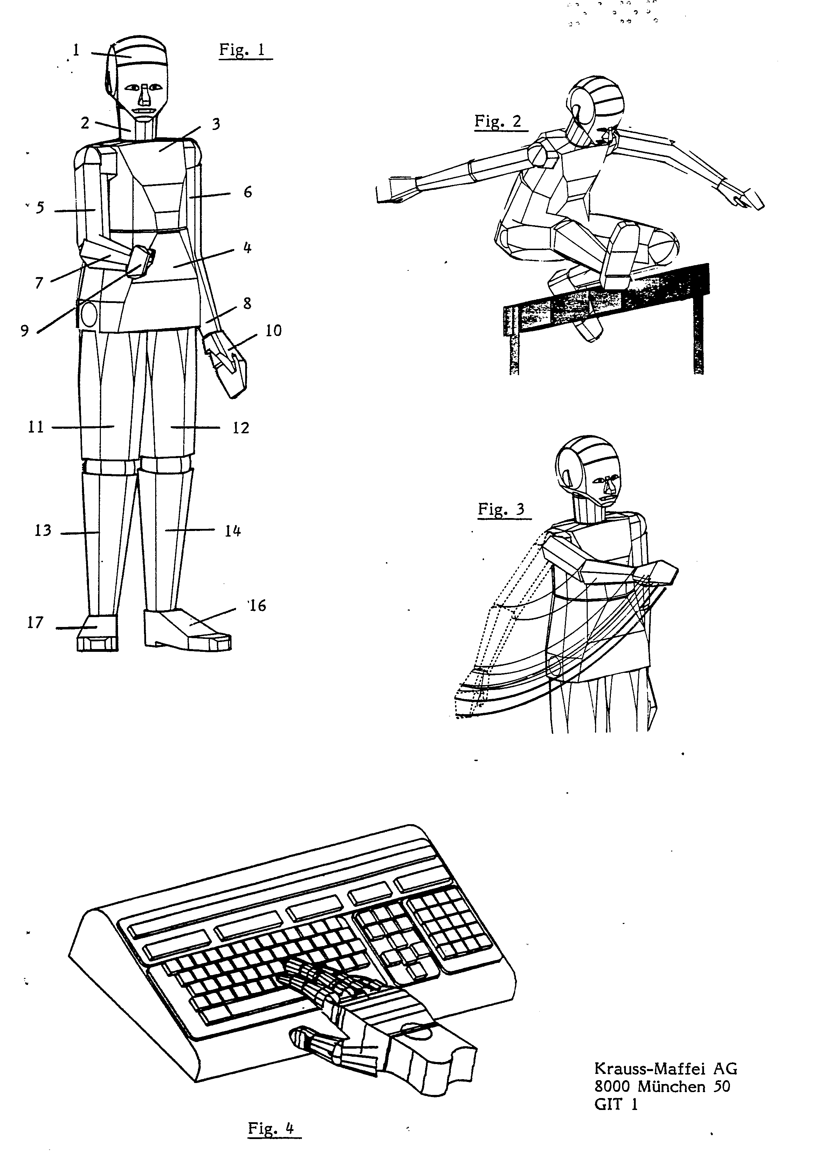

Das erfindungsgemäße Verfahren geht zunächst aus von einem rechnerisch simulierten, dreidimensionalen, flexiblen Körpermodell, wie es in seiner Grundstellung in Fig. 1 dargestellt ist. Dieses Körpermodell ist in eine Vielzahl von relativ zueinander beweglichen Volumeneinheiten unterteilt, im dargestellten Beispielsfalle in einen Kopf 1, einen Hals 2, einen Oberrumpf 3, einen Unterrumpf 4, Oberarme 5, 6 mit Schultergelenken, Unterarme 7, 8 mit Ellenbogengelenken, Händen, 9, 10 mit Handgelenken, Oberschenkeln 11, 12 mit Hüftgelenken, Unterschenkeln 13, 14 mit Kniegelenken sowie Füßen 15, 16 mit Fußgelenken. Im Bedarfsfalle, z. B. für Untersuchungen von feinmotorischen Bewegungen können die Hände 9, 10 in Unter-Volumeneinheiten unterteilt werden, und zwar jeweils in eine Mittelhand, einen Daumen mit drei Daumengelenken sowie vier Fingern mit je drei Fingergelenken (vgl. Fig. 3).

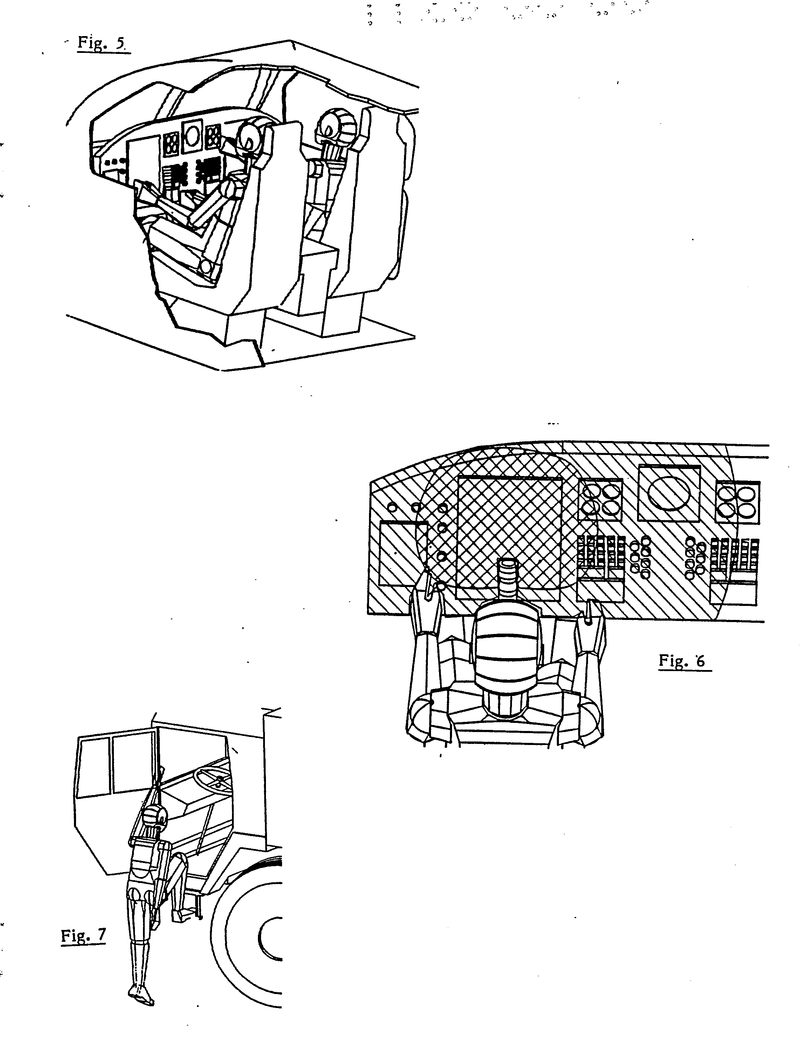

Jede dieser Volumeneinheiten wird definiert durch eine Vielzahl von Raumkoordinaten, welche sowohl die Oberflächen als auch das Innere der Volumeneinheiten beschreiben. Wesentlich ist, daß die Raumkoordinaten für jede Volumeneinheit sämtliche möglichen Bewegungsstellungen der betreffenden Volumeneinheit relativ zu den angrenzenden Volumeneinheiten umfassen. Dies führt zwar dazu, daß in der dargestellten Grundstellung gemäß Fig. 1 Teile benachbarter Volumeneinheiten dieselben Raumkoordinaten aufweisen, was für die Modellsimulation jedoch keine Störung bedeutet; diese teilweisen Überschneidungen gestatten es jedoch, daß in sämtlichen anatomisch zulässigen Bewegungen des simulierten Modells aneinander angrenzende Volumeneinheiten ohne Lücken an der Oberfläche aneinander stoßen, wie dies anhand von Figuren 2 und 7 für einen Hürdenläufer bzw. einen LKW-Fahrer beim Einstieg in das Fahrzeug dargestellt ist.

Die Raumkoordinaten für die einzelnen Volumeneinheiten können für unterschiedliche Grundgrößen (Perzentilen) definiert werden, um der bevölkerungsspezifischen Größenverteilung Rechnung zu tragen. Darüber hinaus ist die individuelle Variation von Raumkoordinaten möglich, um anatomische Besonderheiten, wie z. B. "Sitzriesen" oder die Amputation von Extremitäten, zu berücksichtigen.

Ein weiteres wesentliches Merkmal des erfindungsgemäßen Verfahrens besteht darin, daß -ausgehend von den Raumkoordinaten jeder Volumeneinheit - alle erdenklichen Bewegungszustände der Volumeneinheit relativ zueinander (vgl. Figuren 2 und 3) sowie zu einer beliebig vorgegebenen oder vorgebbaren Umgebung, z. B. einem Flugzeugcockpit in Fig. 5 und 6 oder einer LKW-Fahrkabine in Fig. 7, nach Maßgabe von Bewegungsgleichungen bestimmt werden. Die Anzahl der dabei für jede aus der Grundstellung nach Fig. 1 bewegte Volumeneinheit zu lösenden Bewegungsgleichungen hängt ab von den Freiheitsgraden der einzelnen Gliedmaßen bzw. Körperteile, zu denen die be trachtete Volumeneinheit gehört. So werden im Beispielsfalle von Fig. 3 für den rechten Arm die sich durch das Schultergelenk, das Ellenbogengelenk und das Handgelenk ergebenden Freiheitsgrade der Volumeneinheiten "Oberarm", "Unterarm" und "Hand" in gemeinsamen Bewegungsgleichungen definiert, um koordinierte Bewegungen dieser drei Volumeneinheiten relativ zu den übrigen, aus der Grundstellung gemäß Fig. 1 nicht bewegten Volumeneinheiten zu simulieren. Die Lösung dieser Bewegungsgleichungen erfolgt nach bekannten Methoden und ist nicht Gegenstand dieser Erfindung.

Ein drittes wesentliches Merkmal der Erfindung ist die Plausibilitätskontrolle der an sich möglichen, koordinierten Bewegungen des simulierten Körpermodells. Hierzu bedient man sich gespeicherter Extremwerte, welche auf anatomische Gegebenheiten des zu simulierenden Menschen nach bevölkerungsgruppenspezifischen Merkmalen, abgestellt sind, z. B. maximaler Beugewinkel des Kniegelenkes (a) eines durchschnittlichen Mannes, (b) einer Hochleistungssportlerin und (c) eines Beinbehinderten. Des weiteren können sich diese Extremwerte auf die Geometrie der gewählten Umgebung beziehen. Durch laufenden Ver gleich der Raumkoordinaten der möglichen Bewegungsphasen aller bewegten Volumeneinheiten mit den gespeicherten Extremwerten lassen sich die zulässigen realistischen Bewegungen des simulierten Modells von unzulässigen Bewegungen trennen.

Für die jeweiligen Stellungen des Hand-Arm-Systems besteht die Möglichkeit, für von außen auf dieses System wirkende Kräfte die resultierenden Kräfte und Momente im Handgelenk, im Ellenbogengelenk, im Schultergelenk sowie in Bezug auf die Wirbelsäule zu erhalten.

Ein Anfassen oder Berühren mit der Hand sowie das Anfahren eines räumlichen Zielpunktes mit dem Fuß wird durch die Auflösung der Bewegungsgleichungen ermöglicht, so daß die erforderliche Streckung von Arm und Bein sowie eventuell erforderliche Bewegungen des Oberkörpers in ungünstige Stellungen offensichtlich werden. Desgleichen wird erkennbar, welche Distanz aus der Ausgangsposition zum Zielpunkt über die normale Reichweite hinaus zurückgelegt werden muß.

In weiterer Ausgestaltung der Erfindung werden die Volumeneinheiten mit Massen und Schwerpunkten sowie die Verbindung der Volumeneinheiten untereinander mit Elastizitätswerten versehen, die eine noch bessere Annäherung an die biomechanischen Gegebenheiten von Menschen bewirken.

Weiterhin läßt sich, wie in Fig. 6 durch die doppelt schraffierten und die einfach schraffierten Zonen dargestellt ist, das Ausmaß des optimalen bzw. maximalen Gesichtsfeldes des Modells simulieren. Dies erfolgt dadurch, daß für die Volumeneinheit "Kopf" zusätzlich die Raumkoordinaten zweier gleichachsiger Kegel definiert werden, deren Schnittflächen mit vorgebbarer Umgebung die beiden Gesichtsfelder ergeben.

**Ansprüche**

1. Verfahren zur Simulation der Bewegungen von menschlichen Körpermodellen, bei dem das Körpermodell in eine Vielzahl von relativ zueinander bewegbaren Volumeneinheiten rechnerisch zerlegt wird, **gekennzeichnet durch** folgende Verfahrensschritte:

-die Volumeneinheiten werden in ihrer räumlichen Ausdehnung jeweils durch eine Vielzahl von gespeicherten Raumkoordinatenpunkten festgelegt, welche sowohl die Oberflächen als auch das Innere der Volumeneinheiten definieren;

-Die Volumeneinheiten werden durch Veränderung der gespeicherten Raumkoordinatenpunkte nach Maßgabe von Bewegungsgleichungen in ihrer relativen Bewegung zueinander und gegenenfalls zu einer vorgegebenen oder vorgebbaren Umgebung simuliert, wobei eine Plausibilitätskontrolle der Bewegungszustände der einzelnen Volumeneinheiten mit gespeicherten Extremwerten bezüglich der Körperanatomie und gegebenenfalls der Umgebungsgeometrie erfolgt; und

-die Bestimmung der Raumkoordinatenpunkte jeder Volumeneinheit erfolgt in der Weise, daß sich in sämtlichen Bewegungszuständen ununterbrochene Oberflächenübergänge zwischen aneinander angrenzenden Volumeneinheiten ergeben, wobei zumindest in der Grundstellung des Körpermodells aneinander angrenzende Volumeneinheiten teilweise identische Raumkoordinaten aufweisen.

2. Verfahren nach Anspruch 1, **dadurch gekennzeichnet**, daß die Auswahl der Extremwerte bezüglich der Körperanatomie bevölkerungsgruppenspezifisch unter Berücksichtigung ergonomischer Gesichtspunkte erfolgt.

3. Verfahren nach Anspruch 1 oder 2, **dadurch gekennzeichnet**, daß zur Simulation des Gesichtsfeldes für die Volumeneinheit "Kopf" zusätzlich die Raumkoordinaten zweier gleichachsiger Kegel definiert werden, deren Schnittflächen mit der vorgegebenen oder vorgebbaren Umgebung das Gesichtsfeld ergeben.

4. Verfahren nach einem der Ansprüche 1 bis 3, **dadurch gekennzeichnet**, daß für die Volumeneinheiten die jeweilige Masse und der jeweilige Schwerpunkt vorgegeben werden, daß für die Verbindung zwischen den Volumeneinheiten Elastizitätswerte vorgegeben werden und daß die vorgegebenen Massen, Schwerpunkte und Elastizitätswerte bei der Bewegungssimulation nach Maßgabe der Bewegungsgleichungen berücksichtigt werden.

Fig. 1

Fig. 2

Fig. 3

Fig. 4

Krauss-Maffei AG
8000 München 50
GIT 1

0 246 340

Fig. 5

Fig. 6

Fig. 7

Krauss-Maffei AG
8000 München 50
GIT 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | COMPUTER DESIGN, Band 21, Nr. 9, September 1982, Seiten 74,76, Winchester, Massachusetts, US; J. ASEO: "Computer aided modeler provides man-machine assessment without mockups or fit trials" * Insgesamt * | 1,2 | G 09 B 23/28<br>G 06 F 15/72 |
| A | IDEM | 3 | |
| | --- | | |
| A | SYSTEMS-COMPUTERS-CONTROLS, Band 12, Nr. 2, März-April 1981, Seiten 45-47, Scripta Publishing Co., Silver Spring, Maryland, US; T. AGUI et al.: "A computer animation composed of connected animation primitives" * Seiten 45-47,53 * | 1,4 | |
| | --- | | **RECHERCHIERTE SACHGEBIETE (Int. Cl.4)** |
| A | JOURNAL OF ENGINEERING FOR INDUSTRY, Band 97, Nr. 1, Februar 1975, Seiten 49-57; J.A. BARTZ et al.: "Computer program to generate dimensional and inertial properties of the human body" * Seite 51, Spalte 3; Seite 53 * | 1,2,4 | G 09 B<br>A 61 B<br>G 06 F |
| | --- | | |
| A | FUNKSCHAU, Nr. 24, November 1983, Seiten 57-60, München, DE; K.H. KNAPP: "Computer-Grafik fasziniert Amerika" | | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 19-01-1987 | ODGERS M.L. |